# EUROPEAN PATENT SPECIFICATION

(11) **EP 2 017 046 B1**
(45) Date of publication and mention of the grant of the patent: **07.09.2011**
(21) Application number: 08160372.2
(22) Date of filing: 15.07.2008
(51) Int. Cl.: B27C 1/04, B27C 1/14, B23Q 11/00, B23Q 16/00

(54) **Portable planing machine**
Tragbare Hobelmaschine
Raboteuse portable

(30) Priority: 16.07.2007 US 879056
(43) Date of publication of application: 21.01.2009
(73) Proprietor: Black & Decker Inc., Newark, Delaware 19711 (US)
(72) Inventor: Merhar III, Carl F, Jackson, TN 38305 (US); Vick, Stephen L., Reisterstown, MD 21136 (US); Carnal, Steve, Milan, TN 38358 (US); Chen, Vincent, 8, Taichung (TW)
(74) Representative: Bell, Ian Stephen

(56) References cited:
- US-A- 3 965 721
- US-A- 4 319 860
- US-A- 5 771 949
- US-A1- 2002 174 912

## Description

The present invention relates to an apparatus in accordance with the preamble of claim 1.
Such an apparatus is used preferably in woodworking. More particularly, the apparatus may be a portable wood planing machine for the surface planing of wooden planks or boards.

Various power tools are used in woodworking in an effort to efficiently and accurately cut workpieces to desired dimensions and surface quality. As is widely known, planing machines are often used for surface planing of wooden boards. A conventional planing machine typically includes one or more rotatably mounted cutting blades attached to a vertically movable carriage assembly. Also known are jointer machines which are typically used for the edge planing of wood. In certain applications, the functions of conventional planing machines and jointers are combined within a single unit commonly referred to as a jointer/planer machine.

In a typical wood planing machine, such as a surface planer, a selectively adjustable workpiece opening is defined between a carriage assembly and a support surface. The one or more rotationally mounted blades are carried on the underside of the carriage assembly adjacent the workpiece opening. The blades are adapted to remove a predetermined amount of material from the workpiece depending on the height of the workpiece opening. The carriage assembly also usually includes one or more feed rollers which urge the workpiece through the workpiece opening during Operation of the wood planing machine.

In most applications, the carriage assembly of a wood planing machine is movably mounted to a plurality of support columns for movement with respect to a workpiece support surface, such as a base or platen. Such movement of the carriage assembly adjusts the vertical dimension of the workpiece opening so as to selectively determines the amount of material to be removed from the workpiece. Alternatively, in certain applications it is desirable to fixedly mount the carriage assembly and to adjust the workpiece opening by moving the base or platen vertically with respect to the carriage assembly.

In use, a workpiece is passed through the workpiece opening and a predetermined amount of material is removed from the surface of the workpiece adjacent the carriage assembly. Multiple passes of the workpiece through the workpiece opening are often necessary to obtain the desired thickness and surface quality. As with other woodworking operations, it is desirable that a planing machine accomplish workpiece preparation with precise tolerances, high surface quality, and a significant degree of reproducible results.

In the field of woodworking it is desirable to provide a wood planing machine having a depth stop mechanism which serves to physically stop the lowering of the carriage assembly at a predetermined depth. Additionally, it is desirable to provide a wood planing machine having a depth stop adjustment which may be more adjustable and more quickiy set to a desired depth as compared to prior known devices.

Patent publication No. US 6,601,621B discloses an apparatus for performing a cutting function on a workpiece in accordance with the preamble of claim 1

In accordance with a preferred embodiment of the present invention, an improved planing machine is employed. The planing machine may include a base, at least two support columns disposed on the base, a carriage assembly carrying a cutterhead, the carriage assembly being mounted on the support columns, one of the workpiece support surface and the carriage assembly being movable vertically towards the other of the workpiece support surface and the carriage assembly. In an exemplary embodiment, the planing machine includes a depth stop adjustment mechanism which allows the operator to accurately select a minimum workpiece depth from one or more predetermined depths.

Additional features and benefits of the present invention are described, and will be apparent from, the accompanying drawings and the detailed description below.

Additional objects and advantages of the present invention will become apparent from a reading of the following detailed description of the preferred embodiments which make reference to the drawings of which:
Fig. 1 is a perspective view of a portable wood planing machine constructed in accordance with a preferred embodiment of the present invention;
Fig. 2 is an enlarged partial perspective view of a first portion of the depth stop adjustment mechanism of Fig. 1;
Fig. 3 is an enlarged perspective view of a second portion of the depth stop adjustment mechanism of Fig. 1, in particular, a rear portion of the depth stop mechanism handle;
Fig. 4 is a schematic diagram illustrating the depth stop adjustment mechanism for the planing machine; and
Fig. 5 is a schematic diagram illustrating a dust exhaust for the planing machine.

As required, detailed embodiments of the present invention are disclosed herein. However, it is to be understood that the disclosed embodiments are merely exemplary of the invention which may be embodied in various forms. Therefore, specific functional and structural details disclosed herein are not to be interpreted as limiting, but merely as a basis for the claims and as a representative basis for teaching one skilled in the art to variously employ the present invention in virtually any appropriately detailed structure.

In a preferred embodiment, present invention provides an improved portable wood planing machine for the surface planing of a workpiece such as a wooden board or plank.

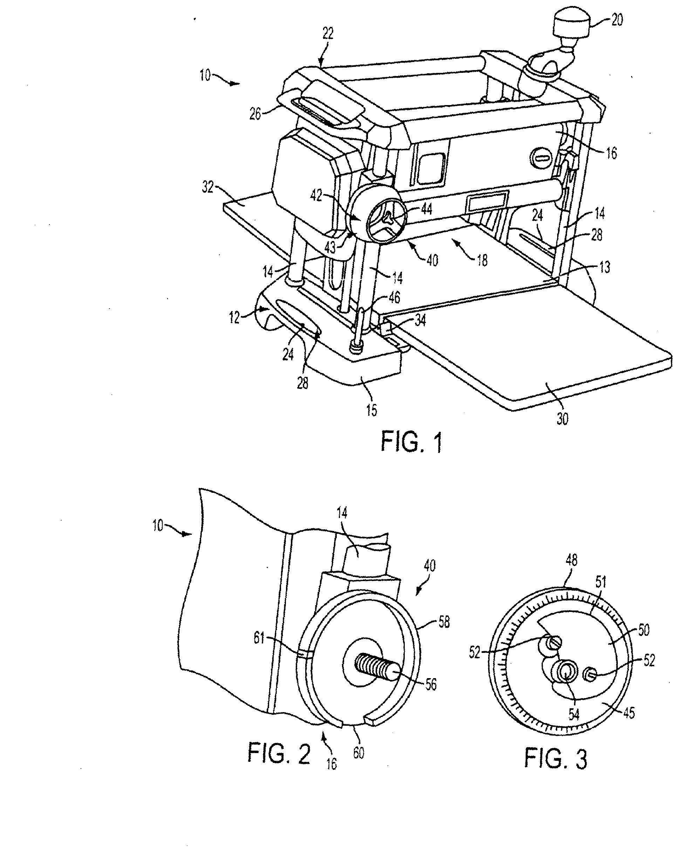

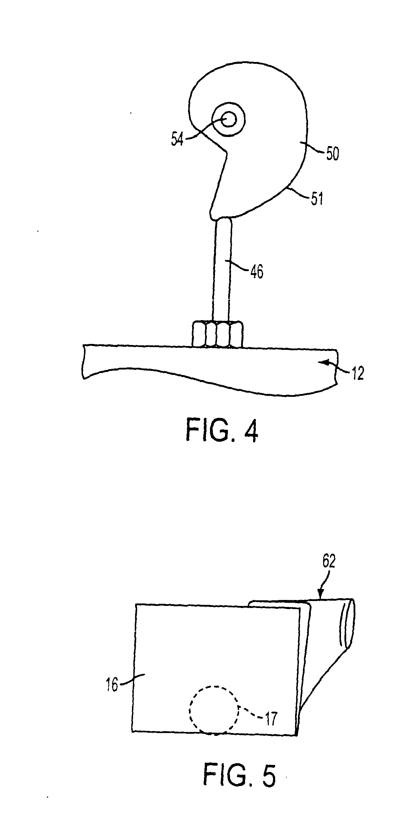

With reference to Fig. 1, a planing machine constructed in accordance with the teachings of the present invention is generally indicated by reference numeral 10. The planing machine 10 may include a base assembly 12 including a support platen 13 and feet 15, at least two, but preferably four, support columns 14, and a carriage assembly 16 mounted on the support columns 14. Carriage assembly 16 may carry a motor, a cutterhead 17 (shown in Fig. 5) driven by the motor, and/or feed rollers driven by the motor, as is well known in the art.

In the embodiment shown, the carriage assembly 16 is preferably slideably mounted on four support columns 14 for bidirectional vertical movement. The carriage assembly 16 may be selectively translated upwardly or downwardly along a path of travel along the support columns 14 by a user via operation of handle 20. An exemplary arrangement for translating the carriage assembly is described in further detail in U.S. Patent No. 5,771,949 entitled, "Portable Wood Planing Machine" and U.S. Patent No. 5,725,035 entitled, "Apparatus for Adjusting the Relative Positions of Two Components of a Power Tool". The carriage assembly 16 preferably cooperates with the support platen 13 to define a workspace opening 18 into which a workpiece may be inserted.

Base assembly 12 as well as top assembly 22 may include handles 24 and 26, respectively, for enabling the user to carry the planing machine 10. Preferably, base assembly 12 includes openings 28 which allow a user to wrap his or her hand around the handle 24 and comfortably insert his or her fingers into the openings 28. With respect to handles 26, they preferably extend outwardly from top assembly 22 allowing a user to comfortably wrap his or her hand around the handle 26 without any interference from the top assembly 22.

With continued reference to Fig. 1, planing machine 10 also preferably includes forwardly and rearwardly extending feed tables 30 and 32 for further supporting the workpiece during operation of the planing machine 10. In a preferred embodiment, the forwardly and rearwardly extending feed tables 30 and 32 are each pivotally attached to the base assembly 12 through a pair of pivot supports 34 which are fixedly attached to the base assembly 12. The means to attach feed tables 30 and 32 to pivot support 34 are conventional and can include any number of fasteners and/or rods. Since feed tables 30 and 32 are pivotally attached to the base assembly 12, they can then be folded upwardly from their positions shown in Fig. 1 to storage positions substantially adjacent the front and rear of the planing machine 10, respectively, when the planing machine 10 is not in use.

Turning now to Figs. 1-3, planing machine 10 also includes infinite depth stop mechanism 40, constructed in accordance with the teachings of the present invention, for limiting the downward movement of carriage 16 toward platen 13. Infinite depth stop mechanism 40 includes an adjustment knob 42 which is rotatably connected to the planing machine 10 and movable with carriage assembly 16, preferably a locking member 44 which is operably connected to adjustment knob 42, and a stop rod 46 which is fixedly connected to base assembly 12. In another exemplary embodiment, stop rod 46 may be adjustably connected to base assembly 12. In yet another preferred embodiment, adjustment knob 42 may be rotatably attached to base assembly 12 and stop rod 46 may be fixedly or adjustable attached to carriage assembly 16. The operation of infinite depth stop mechanism 40 is explained below.

Looking at Figs. 1 and 3, adjustment knob 42 has a front or outward side 43 which is configured and dimensioned for user interfacing and a rear or inward side 45, which can best be seen in Fig. 3. The front or outward side 43 may include texturing to facilitate gripping by the user and preferably includes a scale 48 to provide a user with visual indication of a desired measurement or setting. Adjustment knob 42 also includes cam 50 on rear or inward side 45 thereof. Cam 50 is preferably mounted to adjustment knob 42 in a manner that allows cam 50 to move with adjustment knob 42. In an exemplary embodiment, cam 50 is mounted on inward side 45 of adjustment knob 42 via a plurality of fasteners 52. Although cam 50 is shown attached via a plurality of fasteners 52, other means of fastening are also contemplated including chemical bonding, molding, and welding. As can be seen best in Figs. 3 and 4, cam 50 preferably has a generally nautilus shape and includes a central aperture 54, which, in a preferred embodiment is at least partially threaded and extends through adjustment knob 42.

With reference to Fig. 2, a portion of planing machine 10 can be seen where adjustment knob 42 preferably is mounted to carriage assembly 16. In a preferred embodiment, a portion of carriage assembly 16 that is mounted on support column 14 also includes post 56, which is at least partially threaded in a preferred embodiment, and frame 58. Frame 58 also preferably includes opening 60 and an indicator 61, which is used in conjunction with scale 48. Although adjustment knob 42 is shown to include scale 48 and frame 58 is shown to include indicator 61, in another preferred embodiment, frame 58 may include a scale and adjustment knob 42 may include an indicator. In a preferred embodiment, adjustment knob 42 is mounted to planing machine 10 by threadably attaching adjustment knob 42 to post 56 via central aperture 54. Adjustment knob 42 is preferably mounted in such a manner as to abut frame 58 when mounted to planing machine 10.

In another preferred embodiment, adjustment knob 42 may be mounted to base assembly 12 instead of carriage assembly 16 and stop rod 46 may be mounted to carriage assembly 16 instead of base assembly 12. In this preferred embodiment, a portion of base assembly 12 that is near support column 14 also includes post 56, which is at least partially threaded in a preferred embodiment, and frame 58. Frame 58 also preferably includes opening 60 and an indicator 61, which is used in conjunction with scale 48. Although adjustment knob 42 is shown to include scale 48 and frame 58 is shown to include indicator 61, in another preferred embodiment, frame 58 may include a scale and adjustment knob 42 may include an indicator. In a preferred embodiment, adjustment knob 42 is mounted to planing machine 10 by threadably attaching adjustment knob 42 to post 56 via central aperture 54. Adjustment knob 42 is preferably mounted in such a manner as to abut frame 58 when mounted to planing machine 10.

Turning back to Fig. 1, located preferably in the center of adjustment knob 42 is a locking member 44 configured to lock adjustment knob 42 in place once a user has set adjustment knob 42 in the desired position. In a preferred embodiment, locking member 44 will include an opening, preferably a threaded opening, that will threadably attach to post 56. The operation of the locking member 42 will be described below.

In an exemplary use of infinite depth stop mechanism 40, a user would first rotate adjustment knob 42 to the desired measurement or setting with the assistance of scale 48 and indicator 61. As adjustment knob 42 is rotated, cam 50 is also rotated since cam 50 is fixedly attached to adjustment knob 42. The user then locks adjustment knob 42 in place by turning locking member 44 and moving locking member 44 into further threaded engagement with post 56. In a preferred embodiment, as locking member 44 is further threaded onto post 56, locking member 44 locks adjustment knob 42 in place by a threaded friction or interference fit. Once adjustment knob 42 is locked in place, the user lowers carriage assembly 16 towards platen 13 by actuating handle 20. As carriage assembly 16 approaches the desired depth, depth stop mechanism 40 will prevent carriage assembly 16 from lowering beyond the desired depth measurement.

With reference to Fig. 4, as carriage assembly 16 approaches the desired depth, stop rod 46 will abut cam 50 on abutment surface 51 by entering frame 58 via opening 60. The abutment of stop rod 46 with abutment surface 51 of cam 50 will prevent further downward movement of carriage assembly 16 toward platen 13. The generally nautilus shape of cam 50 allows a user to choose the desired depth stop measurement at any desired increment because abutment surface 51 of cam 50 is an arcuate surface with a variable curvature. Furthermore, the variable curvature of the arcuate surface of abutment surface 51 of cam 50 prevents back driving of cam 50 once cam 50 is engaged by stop rod 46.

While the various features of the present invention have been shown and described in connection with a portable wood planer, it will be appreciated by those skilled in that art that many of these features are suitable in connectiopn with other woodworking power tools. For example, many of the features may be readily modified for use with a jointer machine or a combinaison jointer/planer machine. Further, it will be understood that the teachings of the present invention are equally applicable for planing machines in which a portion of the base is moved relative to a stationary carriage assembly or cutting head.

## Claims

1. An apparatus (10) for performing a cutting function on a workpiece, the apparatus comprising:
a base (12);
a plurality of support columns (14) disposed on the base;
a carriage assembly (16) interconnected to the support columns, the carriage assembly including a workpiece cutter head (17);
a workpiece support surface (13) disposed on the base and disposed relative to the carriage assembly so as to define a selectively adjustable workpiece opening (18) therebetween;
one of the carriage assembly (16) and the workpiece support surface (13) being vertically moveable towards the other of the workpiece support surface and the carriage assembly; and
a depth stop mechanism (40) for limiting movement of the carriage assembly towards the workpiece support surface, wherein the depth stop mechanism is disposed on one of the carriage assembly and the base,
the apparatus comprises a stop rod (46) disposed on the other of the carriage assembly and the base,
**characterised in that** the depth stop mechanism includes a rotatable adjustment knob (42) with a cam (50) mounted on one side thereof in a manner in which the cam moves with the adjustment knob, wherein the cam has a continuous abutment surface (51) having a variable curvature with a generally nautilus shape, and wherein the stop rod is configured and dimensioned to abut the abutment surface of the cam.

2. The apparatus of claim 1, wherein the adjustment knob (42) includes a peripheral surface (43) that is textured to facilitate gripping the adjustment knob.

3. The apparatus of claim 1, wherein the adjustment knob (42) includes one of a scale (48) and an indicator (61).

4. The apparatus of claim 1, wherein the cam (50) and the adjustment knob (42) include a central opening (54) and wherein at least a portion of the central opening is threaded.

5. The apparatus of claim 1, wherein one of the carriage assembly (16) and base (12) includes a post (56) and a frame (58) surrounding the post and wherein at least a portion of the post is threaded and at least a portion of the frame includes an opening (60).

6. The apparatus of claim 5, wherein the frame (58) includes one of a scale (48) and an indicator (61).

7. The apparatus of claim 1, wherein the depth stop mechanism (40) includes a locking member (44) for locking the adjustment knob (42) in place.

## Patentansprüche

1. Vorrichtung (10) zur Durchführung einer Schneidefunktion auf einem Werkstück, wobei die Vorrichtung Folgendes umfasst:
eine Basis (12);
eine Vielzahl von Stützsäulen (14), angebracht auf der Basis;
eine Trageanordnung (16), verbunden mit den Stützsäulen, wobei die Trageanordnung einen Werkstück-Schneidekopf (17) umfasst;
eine Werkstück-Stützfläche (13), angebracht auf der Basis und angebracht bezüglich der Trageanordnung, um eine selektiv einstellbare Werkstücköffnung (18) dazwischen zu definieren;
wobei entweder die Trageanordnung (16) oder die Werkstück-Stützfläche (13) vertikal auf die andere Werkstück-Stützfläche oder Trageanordnung hin beweglich ist; und
einen Tiefenanschlagmechanismus (40), um die Bewegung der Trageanordnung auf die Werkstück-Stützfläche hin zu begrenzen, wobei der Tiefenanschlagmechanismus auf entweder der Trageanordnung oder der Basis angeordnet ist,
die Vorrichtung umfasst eine Stoppstange (46), angebracht auf der anderen Trageanordnung oder Basis,
**dadurch gekennzeichnet, dass** der Tiefenanschlagmechanismus einen drehbaren Einstellungsknopf (42) mit einem Nocken (50) umfasst, montiert auf einer Seite davon auf eine Weise, in der sich der Nocken mit dem Einstellungsknopf bewegt, wobei der Nocken eine ununterbrochene Anschlagfläche (51) mit einer variablen Krümmung, im Wesentlichen nautilusförmig, aufweist, und wobei die Stoppstange konfiguriert und abgemessen ist, um an der Anschlagfläche des Nockens anzuschlagen.

2. Vorrichtung nach Anspruch 1, wobei der Einstellungsknopf (42) eine periphere Fläche (43) aufweist, die strukturiert ist, um das Greifen des Einstellungsknopfes zu erleichtern.

3. Vorrichtung nach Anspruch 1, wobei der Einstellungsknopf (42) entweder eine Skala (48) oder einen Indikator (61) aufweist.

4. Vorrichtung nach Anspruch 1, wobei der Nocken (50) und der Einstellungsknopf (42) eine zentrale Öffnung (54) umfassen, und wobei mindestens ein Abschnitt der zentralen Öffnung mit einem Gewinde versehen ist.

5. Vorrichtung nach Anspruch 1, wobei entweder die Trageanordnung (16) oder die Basis (12) eine Stange (56) und einen Rahmen (58) umfasst, der die Stange umgibt, wobei mindestens ein Abschnitt der Stange mit einem Gewinde versehen ist und mindestens ein Abschnitt des Rahmens eine Öffnung (60) umfasst.

6. Vorrichtung nach Anspruch 5, wobei der Rahmen (58) entweder eine Skala (48) oder einen Indikator (61) umfasst.

7. Vorrichtung nach Anspruch 1, wobei der Tiefenanschlagmechanismus (40) ein Blockierelement (44) zum Blockieren des Einstellungsknopfes (42) in seiner Position einschließt.

## Revendications

1. Appareil (10) pour réaliser une fonction de coupe sur une pièce, l'appareil comprenant :
une base (12) ;
une pluralité de colonnes de support (14) disposées sur la base ;
un ensemble chariot (16) relié aux colonnes de support, l'ensemble chariot comprenant une tête de coupe de pièce (17) ;
une surface de support de pièce (13) disposée sur la base et disposée par rapport à l'ensemble chariot afin de définir une ouverture de pièce sélectivement ajustable (18) entre ceux-ci ;
un élément parmi l'ensemble chariot (16) et la surface de support de pièce (13) étant mobile verticalement vers l'autre élément parmi la surface de support de pièce et l'ensemble chariot ; et
un mécanisme d'arrêt de profondeur (40) pour limiter le mouvement de l'ensemble chariot vers la surface de support de pièce, dans lequel le mécanisme d'arrêt de profondeur est disposé sur un élément parmi l'ensemble chariot et la base,
l'appareil comprend une tige d'arrêt (46) disposée sur l'autre élément parmi l'ensemble chariot et la base,
**caractérisé en ce que** le mécanisme d'arrêt de profondeur comprend un bouton de réglage rotatif (42) avec une came (50) montée sur un côté de celui-ci de manière telle que la came se déplace avec le bouton de réglage, dans lequel la came comporte une surface de butée continue (51) possédant une courbure variable généralement en forme de nautile, et dans lequel la tige d'arrêt est configurée et dimensionnée pour prendre appui sur la surface de butée de la came.

2. Appareil selon la revendication 1, dans lequel le bouton de réglage (42) comprend une surface périphérique (43) qui est texturée pour faciliter la préhension du bouton de réglage.

3. Appareil selon la revendication 1, dans lequel le bouton de réglage (42) comprend un élément parmi une échelle (48) et un indicateur (61).

4. Appareil selon la revendication 1, dans lequel la came (50) et le bouton de réglage (42) comprennent une ouverture centrale (54) et dans lequel au moins une partie de l'ouverture centrale est filetée.

5. Appareil selon la revendication 1, dans lequel un élément parmi l'ensemble chariot (16) et la base (12) comprend un montant (56) et un cadre (58) entourant le montant et dans lequel au moins une partie du montant est filetée et au moins une partie du cadre comprend une ouverture (60).

6. Appareil selon la revendication 5, dans lequel le cadre (58) comprend un élément parmi une échelle (48) et un indicateur (61).

7. Appareil selon la revendication 1, dans lequel le mécanisme d'arrêt de profondeur (40) comprend un élément de verrouillage (44) pour verrouiller le bouton de réglage (42) en place.
